# EUROPÄISCHE PATENTANMELDUNG

(11) **EP 3 581 427 A1**
(43) Veröffentlichungstag der Anmeldung: **18.12.2019**
(21) Anmeldenummer: 19179499.9
(22) Anmeldetag: 11.06.2019
(51) Int. Cl.: B60L 3/00, B60L 9/00, B60L 15/20, B60L 15/32

(54) **VERFAHREN ZUM BETREIBEN EINES ELEKTRISCH ANGETRIEBENEN FAHRZEUGS UND ELEKTRISCH ANGETRIEBENES FAHRZEUG**

(30) Priorität: 14.06.2018 DE 102018209582
(71) Anmelder: Bombardier Transportation GmbH, 10785 Berlin (DE)
(72) Erfinder: Isepponi, Gerhard, 8113 Boppelsen (CH)
(74) Vertreter: Patentanwälte Bressel und Partner mbB

(57) **Zusammenfassung**

Die Erfindung betrifft ein Verfahren zum Betreiben eines elektrisch angetriebenen Fahrzeugs (10) im Kurzschlussfall, insbesondere eines Schienenfahrzeugs, umfassend die Schritte:
Detektieren eines Kurzschlusses in einer Antriebseinrichtung (39) des Fahrzeugs (10), die eine permanentmagneterregten Antriebsmaschine (20) umfasst, während einer Fahrt des Fahrzeugs (10);
Fortsetzen der Fahrt bei einer Geschwindigkeit, die wenigstens eine der folgenden Voraussetzungen erfüllt:
- die Geschwindigkeit liegt unterhalb einer für das Auftreten des Kurzschlusses kritischen Geschwindigkeit;
- die Geschwindigkeit ist derart gewählt, dass eine mechanische Resonanzfrequenz eines Antriebsstrangs des Fahrzeugs (10) nicht oder nur vorübergehend erreicht wird.

Ferner betrifft die Erfindung ein elektrisch angetriebenes Fahrzeug (10) mit einer Steuereinrichtung (52), um ein derartiges Verfahren auszuführen.

## Beschreibung

Die Erfindung betrifft ein Verfahren zum Betreiben eines elektrisch angetriebenen Fahrzeugs und ein elektrisch angetriebenes Fahrzeug.

Elektrisch angetriebene Fahrzeuge, insbesondere Züge oder Zugteile wie beispielsweise Lokomotiven oder Triebwagen, umfassen typischerweise eine Mehrzahl von elektrischen Antriebsmaschinen. Die elektrischen Antriebsmaschinen, auch Traktionsmotoren genannt, wandeln elektrische Energie in mechanische Antriebsenergie zur Traktion des Fahrzeugs um.

Obwohl derartige Antriebsmaschinen für eine hohe Lebensdauer konzipiert sind, können Störungen und insbesondere Kurzschlüsse auftreten. Diese können beispielsweise durch Alterungserscheinungen in dem Isolationssystem der Antriebsmaschine verursacht werden. Der Kurzschluss kann unter Umständen zum Ausbilden eines Lichtbogens innerhalb oder außerhalb der Antriebsmaschine führen. Es kann aber auch zu einem Strom-Durchschlag durch isolierendes Material, zum Beispiel zwischen benachbarten Leitungsabschnitten der Wicklung des Stators der Antriebsmaschine, kommen.

Im Fall einer nicht permanenterregten Antriebsmaschine, zum Beispiel einer Asynchronmaschine, kann eine von extern zugeführte Erregung des Stators auf einfache Weise unterbunden werden, um das wiederholte Auftreten des Kurzschlusses auszuschließen. Die Fahrt kann dann durch den Betrieb von anderen, nicht vom Kurzschluss betroffenen Antriebsmaschinen des Fahrzeugs fortgesetzt werden.

Im Fall einer permanenterregten Antriebsmaschine, die auch als Permanentmagnetmotor bezeichnet werden kann, erzeugt der Rotor immer dann ein sich änderndes Magnetfeld, wenn sich der Rotor dreht. Der Grund dafür liegt darin, dass der Rotor zumindest einen Permanentmagneten aufweist. Es wird daher auch weiterhin eine elektrische Spannung in der Statorwicklung der Antriebsmaschine induziert, wenn das Fahrzeug fährt. Dem liegt der typische Fall zugrunde, dass der mechanische Antriebsstrang von der Antriebsmaschine bis zum angetriebenen Rad oder den angetriebenen Rädern nicht aufgetrennt werden kann. Daher treibt das ansonsten von der Antriebsmaschine angetriebene Rad während der Fahrt des Fahrzeugs den Rotor der Antriebsmaschine an. Das erneute Auftreten des Kurzschlusses kann daher nicht ausgeschlossen werden.

Tritt in einer permanenterregten Antriebsmaschine (oder in einer Antriebseinrichtung, die eine solche Antriebsmaschine umfasst) während der Fahrt ein Kurzschluss auf, ist es daher üblich, das Fahrzeug bis zum Stillstand abzubremsen und erst nach Behebung des Kurzschlusses wieder anzufahren. So soll sichergestellt werden, dass die Antriebseinrichtung nicht weiter durch Kurzschluss beschädigt oder zerstört wird. Das Anhalten des Fahrzeugs ist jedoch in der Regel unerwünscht und kann zu Störungen im Betriebs- und/oder im Fahrplanablauf führen.

Aufgabe der vorliegenden Erfindung ist es daher, die Verfügbarkeit von elektrisch angetriebenen Fahrzeugen mit zumindest einer permanentmagneterregten Antriebsmaschine zu verbessern.

Diese Aufgabe wird durch ein Verfahren und ein Fahrzeug gemäß den beigefügten unabhängigen Ansprüchen gelöst. Vorteilhafte Weiterbildungen sind in den abhängigen Ansprüchen angegeben. Ferner versteht es sich, dass die in der einleitenden Beschreibung erwähnten Merkmale einzeln oder in beliebiger Kombination auch bei der vorliegend offenbarten Lösung vorgesehen sein können, sofern nicht anders angegeben oder ersichtlich.

Die Erfindung sieht allgemein vor, eine Geschwindigkeit zu ermitteln, die das Fortsetzen der Fahrt bei einem geringen Risiko für die Betriebssicherheit ermöglicht. Insbesondere kann die Geschwindigkeit derart gewählt sein, dass das Risiko mechanischer Beschädigungen (insbesondere des nicht für den Antrieb des Fahrzeugs genutzten Antriebsstrang des Fahrzeugs) aufgrund von Resonanzschwingungen reduziert, minimiert oder ausgeschlossen wird. Zusätzlich oder alternativ kann die Geschwindigkeit derart gewählt sein, dass eine Wahrscheinlichkeit für das erneute Auftreten eines Kurzschlusses zum Beispiel in Form eines Lichtbogens reduziert ist. Insbesondere wird die Geschwindigkeit für die Zeit nach dem Auftreten des Kurzschlusses auf Werte unterhalb der ermittelten Geschwindigkeit begrenzt. Dies ermöglicht es, dass das Fahrzeug bei einer Geschwindigkeit unterhalb einer für die Betriebssicherheit kritischen Geschwindigkeit (d. h. die Geschwindigkeit ist niedriger als die kritische Geschwindigkeit oder ist höchstens gleich der kritischen Geschwindigkeit) weiter betrieben werden kann, sodass die Fahrt nicht dauerhaft unterbrochen werden muss. Eine Strecke, auf der sich das Fahrzeug befindet, kann dann trotz der auftretenden Störung geräumt und für andere Fahrzeuge freigegeben werden.

Im Detail wird ein Verfahren zum Betreiben eines elektrisch angetriebenen Fahrzeugs im Kurzschlussfall vorgeschlagen, insbesondere eines Schienenfahrzeugs,
umfassend die Schritte:
Detektieren eines Kurzschlusses in einer Antriebseinrichtung des Fahrzeugs, die eine permanentmagneterregte Antriebsmaschine umfasst, während einer Fahrt des Fahrzeugs;
Fortsetzen der Fahrt bei einer Geschwindigkeit, die wenigstens eine der folgenden Voraussetzungen erfüllt:
   - die Geschwindigkeit liegt unterhalb einer für das Auftreten des Kurzschlusses kritischen Geschwindigkeit;
   - die Geschwindigkeit ist derart gewählt, dass Resonanzschwingungen eines Antriebsstrangs des Fahrzeugs nicht oder nur vorübergehend auftreten.

Insbesondere ist die Geschwindigkeit derart gewählt, dass Resonanzschwingungen in dem Antriebsstrang des Fahrzeugs nicht auftreten.

Bei einer permanentmagneterregten Antriebsmaschine weist der Läufer (Rotor) der Elektromaschine zumindest einen Permanentmagneten auf. Insbesondere kann daher auf elektrische Kontakte zwischen Läufer und Stator der Antriebsmaschine verzichtet werden.

Die Erfindung hat den Vorteil, dass die Gefahr des Induzierens von Spannungen innerhalb der Antriebsmaschine, die zu einem erneuten Auftreten des Kurzschlusses und insbesondere dem Entzünden eines Lichtbogens führen könnten, reduziert werden kann. Selbst bei einem Abschalten der Antriebsmaschine (bzw. bei einem elektrischen Trennen von deren Spannungsquelle) kann diese wie bereits erwähnt infolge weiterer Rotation des Läufers eine Spannung in den Wicklungen des Stators induzieren, da die Antriebsmaschine in der Regel nicht trennbar über den Antriebsstrang mechanisch mit zumindest einem Rad des Fahrzeugs gekoppelt ist. Fährt daher das Fahrzeug bei abgeschalteter Antriebsmaschine, dreht sich auch der Läufer. Die induzierte Spannung kann unter Umständen zu einem erneuten Entzünden eines Lichtbogens und/oder einem Strom-Durchschlag und somit zu einem erneuten Kurzschluss führen. Durch das erfindungsgemäß vorgeschlagene Begrenzen der Geschwindigkeit für die Weiterfahrt wird die Geschwindigkeit der Drehbewegung des Läufers begrenzt. Daher werden die Größe der induzierten Spannung oder Spannungen und somit das Risiko für einen erneuten Kurzschluss reduziert. Die Größe der induzierten Spannung hängt von der Änderung des magnetischen Flusses ab und daher von der Drehgeschwindigkeit des Läufers.

Das Fahrzeug kann als Zug, Zugteil und/oder als Lokomotive oder Triebwagen ausgebildet sein. Das Fahrzeug kann eine Mehrzahl von elektrischen Antriebseinrichtungen und/oder elektrischen Antriebsmaschinen umfassen, insbesondere eine Mehrzahl von permanentmagneterregten Antriebsmaschinen. Das Fahrzeug weist zumindest eine permanentmagneterregte Antriebsmaschine auf. Wenn ein Kurzschluss in dieser Antriebsmaschine oder in einem anderen Teil der Antriebseinrichtung auftritt, der elektrisch mit der Antriebsmaschine verbunden ist (wie zum Beispiel elektrisch nicht von der Antriebsmaschine trennbare Anschlussleitungen), kann die Erfindung mit Vorteil realisiert werden.

Bei der Fahr-Geschwindigkeit und bei der kritischen Geschwindigkeit kann es sich um eine Drehgeschwindigkeit eines Rades des Fahrzeugs handeln, das während der Fahrt des Fahrzeugs auf dem Untergrund (zum Beispiel auf der Fahrschiene) abrollt. Die Rotationsgeschwindigkeit des Rades ist proportional zur Fahrgeschwindigkeit des Fahrzeugs, wenn kein erheblicher Schlupf zwischen Rad und Untergrund auftritt. Alternativ kann es sich bei der Geschwindigkeit um eine Drehgeschwindigkeit des Läufers der Antriebsmaschine handeln. Wenn zwischen der Antriebsmaschine und dem angetriebenen Rad oder den angetriebenen Rädern des Fahrzeugs keine Veränderung der Übersetzung der Drehzahlen stattfindet, ist die Drehgeschwindigkeit des Läufers proportional zur Drehgeschwindigkeit des oder der Räder.

Die Antriebseinrichtung kann neben der Antriebsmaschine auch wenigstens eine oder eine beliebige Kombination der folgenden Komponenten umfassen: die elektrischen Zuleitungen oder Verbindungen der Antriebsmaschine (zum Beispiel die daran angeschlossenen Stromkabel), einen die Antriebsmaschine speisenden Stromrichter (einen sogenannten Traktionsstromrichter), eine Schaltereinrichtung der Antriebsmaschine (zum Beispiel ein sogenanntes Motorschütz oder einen Motorschutzschalter) und einen Anschlusskasten. Der Stromrichter kann durch eine Traktionssteuerung gesteuert werden.

In einer Ausführungsform von Verfahren und Fahrzeug umfasst die Antriebseinrichtung außer der Antriebsmaschine wenigstens die folgenden optionalen Komponenten: einen Stromrichter und elektrische Leitungen, die die Antriebsmaschine mit dem Stromrichter verbinden. Bei dem Stromrichter kann es sich insbesondere um einen Traktionswechselrichter handeln, der die Antriebsmaschine mit einer geeigneten Wechselspannung versorgt. Der Traktionswechselrichter kann hierfür aus einem Gleichspannungszwischenkreis mit elektrischer Energie gespeist werden, wobei der Gleichspannungszwischenkreis als Bestandteil der Antriebseinrichtung betrachtet werden kann oder auch nicht. Sollte in dem Gleichspannungszwischenkreis ein Kurzschluss auftreten, kann die Antriebsmaschine in der Regel elektrisch davon getrennt werden, sodass eine Begrenzung der Geschwindigkeit nicht erforderlich ist

Die Antriebseinrichtung kann auch eine Mehrzahl von Antriebsmaschinen umfassen, wobei je Antriebsmaschine eine oder mehrere der vorstehend genannten weiteren Komponenten der Antriebseinrichtung vorgesehen sein können (zum Beispiel wenigstens eine Schaltereinrichtung je Antriebsmaschine und wenigstens einen Anschlusskasten je Antriebsmaschine). Insbesondere können mehrere Antriebsmaschinen während eines Traktionsbetriebes von einem gemeinsamen Gleichspannungszwischenkreis mit elektrischer Energie versorgt werden, d. h. die mehreren Antriebsmaschinen sind über elektrische Leitungen mit demselben Gleichspannungszwischenkreis jedoch bevorzugt mit jeweils individuell zugeordneten Traktionsstromrichtern verbunden.

Der Kurzschluss kann insbesondere zu einem Kurzschluss-Strom in Form eines Lichtbogens und/oder eines Strom-Durchschlages durch isolierendes Material führen. Es ist daher möglich, den Kurzschluss anhand eines Kurzschluss-Stroms zu detektieren. In einer Variante von Verfahren und Fahrzeug kann der Kurzschluss als ein Kurzschluss innerhalb der Antriebsmaschine detektiert werden. Alternativ oder zusätzlich kann vorgesehen sein, auch Kurzschlüsse in den Anschlussleitungen der Antriebsmaschine zu detektieren, wobei die Anschlussleitungen allgemein zwischen einer optionalen Schaltereinrichtung (z.B. in Form eines Motorschütz) und der Antriebsmaschine verlaufen können.

Für das Detektieren des Kurzschlusses ist eine Detektionseinrichtung vorgesehen. Diese kann zum Beispiel eine Spannung und/oder einen Strom in oder an der Antriebseinrichtung messen (und/oder eine Änderung dieser Größen). Falls zumindest eine dieser Größen ein vorbestimmtes Kriterium erfüllt, kann auf das Vorliegen eines Kurzschlusses geschlossen werden.

Ein Beispiel einer geeigneten Detektionseinrichtung, die aus einer gemessen Stromänderung bzw. stromänderungsabhängigen Größe auf einen etwaigen Kurzschluss schließt, wird in der DE 10 2014 219 278 A1 beschrieben. Insbesondere kann hierbei eine zeitliche Stromänderung in einem Teilnetzwerk ausgewertet werden, das eine permanentmagneterregte Antriebsmaschine umfasst. Angewandt auf Ausgestaltungen des erfindungsgemäßen Verfahrens und des Fahrzeugs kann die Detektionseinrichtung zum Beispiel den elektrischen Strom durch eine oder mehrere elektrische Verbindungen zwischen dem Traktionsstromrichter und der Antriebsmaschine messen. Aus der Höhe der Stromänderung kann auch auf ein Fehlerort in dem Teilnetzwerk geschlossen werden. Dabei wird ausgenutzt, dass die Höhe der Stromänderung umso höher ist, je näher der potentielle Fehlerort an einem Bestimmungspunkt in dem Teilnetzwerk liegt. Eine solche Detektionseinrichtung kann im Rahmen der hierin vorgestellten Lösung zum Beispiel dafür verwendet werden, um etwaige Kurzschlüsse in einer Anschlussleitung der Antriebsmaschine zu detektieren.

Eine weitere Detektionseinrichtung, die insbesondere aus spannungsabhängigen Größen auf einen etwaigen Kurzschluss einer permanentmagneterregten Antriebsmaschine schließt, wird in der DE 10 2014 217 431 A1 beschrieben. Im Detail kann eine drehzahlabhängige Größe bestimmt werden, die zum Beispiel durch das Bestimmen einer Leerlaufspannung der Antriebsmaschine bei einer vorbestimmten Drehzahl gewonnen wird. Weiter kann eine Potentialdifferenz zwischen einer Phasenleitung der Antriebsmaschine, die zum Beispiel zur Versorgung der Antriebsmaschine mit Wechselstrom bzw. mit einer Wechselstromphase dient, und einem Bezugspotential bestimmt werden. Hieraus kann eine potentialdifferenzabhängige Größe bestimmt werden. Aus einer Abweichung der potentialdifferenzabhängigen Größe und der drehzahlabhängigen Größe kann dann auf einen Fehler und insbesondere auf einen Kurzschluss innerhalb der Antriebsmaschine geschlossen werden, beispielsweise wenn die Abweichung im Wesentlichen null beträgt.

Im Rahmen der Erfindung kann vorgesehen sein, die Geschwindigkeit jedenfalls dann zu begrenzen, wenn der Kurzschluss in einem Bereich des elektrischen Antriebsnetzwerks vorliegt, der nicht elektrisch, z. B. über einen oder mehrere Schalter, von dem Ständer (bzw. Stator) der Antriebsmaschine getrennt werden kann. In einem solchen Bereich würde nämlich auch die vorstehend erläuterte in den Wicklungen des Ständers induzierte Spannung anliegen, die erneut zu einem Kurzschluss-Strom führen kann. Entsteht der Kurzschluss hingegen außerhalb eines solchen Bereichs, d. h. in einem von dem Ständer elektrisch trennbaren Bereich des Antriebsnetzwerks, kann ein Begrenzen der Geschwindigkeit nicht erforderlich sein und somit entfallen. Stattdessen kann die elektrische Verbindung zwischen diesem Bereich und dem Ständer getrennt werden. Das Ermitteln des genauen Fehlerorts bzw. des Fehlerbereichs kann zum Beispiel mittels der Detektionseinrichtung der DE 10 2014 219 278 A1 erfolgen. Ist ein solches Ermitteln aber nicht vorgesehen oder schlägt fehl, kann allgemein vorgesehen sein, die Geschwindigkeit aus Sicherheitsgründen bei jeglicher Detektion eines Kurzschlusses zu begrenzen (d.h. unabhängig von dem (unbekannten) Fehlerort zu begrenzen).

Allgemein ist es aber ein Ziel der Erfindung, vor allem auf Kurzschlüsse in der Antriebsmaschine und/oder etwaigen Anschlussleitungen von dieser zu reagieren (zum Beispiel in Anschlussleitungen zwischen einer Schaltereinrichtung und der Antriebsmaschine). Hingegen können Kurzschlüsse in anderen Bereichen unberücksichtigt bleiben und/oder nicht detektiert werden, wie beispielsweise innerhalb von etwaigen Schaltereinrichtungen oder Stromrichtern.

Ausgestaltungen des Verfahrens und auch des Fahrzeugs können ferner vorsehen, die Geschwindigkeit des Fahrzeugs zu bestimmen. Dies kann mittels einer geeigneten Geschwindigkeitsdetektionseinrichtung erfolgen. Die Geschwindigkeit des Fahrzeugs kann anschließend überwacht werden, um sicherzustellen, dass nicht die kritische Geschwindigkeit erreicht wird. Die Fahrzeuggeschwindigkeit muss aber nicht die Größe sein, für die die kritische Geschwindigkeit definiert wird. Wenn kein Schlupf zwischen Rad und Schiene auftritt, sind Werte der Fahrgeschwindigkeit, der Drehgeschwindigkeit der Räder und bei fester Drehzahlübersetzung auch der Drehgeschwindigkeit des Läufers eindeutig einander zuordenbar, d.h. ineinander umrechenbar.

Beispielsweise kann bei einer Weiterfahrt nach einem Kurzschluss die von einem Fahrzeugführer angeforderte Fahrgeschwindigkeit von einer Steuereinrichtung des Fahrzeugs auf höchstens die kritische Geschwindigkeit bzw. einer der kritischen Geschwindigkeit entsprechenden Geschwindigkeit begrenzt werden. Auch bei einer automatischen Weiterfahrt (d. h. bei einer automatischen Vorgabe der Geschwindigkeit, die im Wesentlichen oder vollständig unabhängig von den Eingaben des Fahrzeugführers ist), kann erfindungsgemäß vorgesehen sein, dass die Fahrgeschwindigkeit auf höchstens die kritische Geschwindigkeit begrenzt wird. Gemäß der vorstehenden Variante können sich sowohl die kritische Geschwindigkeit als auch die von der Geschwindigkeitsdetektionseinrichtung gemessene Geschwindigkeit somit auf eine Fahrgeschwindigkeit des Fahrzeugs beziehen.

Ebenso kann aber vorgesehen sein, die Rotationsgeschwindigkeit (oder auch Drehzahl) des Läufers der Antriebsmaschine zu berücksichtigen und mittels einer geeigneten Geschwindigkeitsdetektionseinrichtung zu erfassen. Die kritische Geschwindigkeit kann entsprechend als ein Rotationsgeschwindigkeitswert definiert sein. Entsprechendes gilt für die Rotationsgeschwindigkeit oder Drehzahl eines Rades. Auch kann eine andere Größe verwendet werden, die sich auf eine Bewegung des Antriebsstranges bezieht, z. B. eine Antriebs-Welle.

Bei den vorstehenden Varianten stimmen die Art und Einheit der gemessenen Geschwindigkeit (d.h. Fahrgeschwindigkeit oder Rotationsgeschwindigkeit/Drehzahl) mit der Art und Einheit des Geschwindigkeitswertes überein, der als kritische Geschwindigkeit vorgegeben wird. Dies ist jedoch kein zwingendes Erfordernis.

Alternativ kann im Rahmen der Erfindung die Rotationsgeschwindigkeit des Läufers oder eines Rades oder eines anderen Teils des Antriebsstranges in eine Fahrgeschwindigkeit umgerechnet werden oder umgekehrt. Folglich kann eine dieser Größen als kritische Geschwindigkeit vorgegeben werden, während die andere von einer geeigneten Detektionseinrichtung gemessen wird. Konkret kann z. B. die Fahrgeschwindigkeit gemessen werden, während sich die kritische Geschwindigkeit auf eine Rotationsgeschwindigkeit der Antriebsmaschine oder des Rades oder eines anderen Teils des Antriebsstranges bezieht. Alternativ kann die Rotationsgeschwindigkeit gemessen werden, während sich die kritische Geschwindigkeit auf die Fahrgeschwindigkeit bezieht.

Auch wenn die Geschwindigkeit bei der Weiterfahrt nicht bestimmt und/oder überwacht wird, kann die kritische Geschwindigkeit insbesondere in Bezug auf eine der zuvor genannten Größen definiert sein.

Die Rotationsgeschwindigkeit eines Teils des Antriebsstranges und die Fahrgeschwindigkeit können anhand des Radumfanges und insbesondere eines bekannten Übersetzungsverhältnisses z.B. zwischen der Antriebsmaschine und dem angetriebenen Rad oder Rädern ineinander umgerechnet werden. Ist das Übersetzungsverhältnis veränderlich, wird vorzugsweise ein aktuell gewähltes Verhältnis (z.B. ein aktuell eingelegter Gang) berücksichtigt. Alternativ kann vorbestimmt werden, dass nur ein bestimmtes Übersetzungsverhältnis zur Weiterfahrt verwendet wird und die Umrechnung mit einem entsprechend zugeordneten Umrechnungskoeffizienten erfolgt.

Wird der Kurzschluss detektiert, kann ferner wenigstens einer der folgenden Schritte ausgeführt werden:
- Ein die Antriebsmaschine speisender Stromrichter wird deaktiviert. Mit anderen Worten wird das Versorgen der Antriebsmaschine mit elektrischer Energie durch den Stromrichter unterbunden. Dies kann in an sich bekannter Weise z.B. durch geeignetes Ausschalten von Halbleiterschaltelementen des Stromrichters erfolgen.
- Eine etwaige der Antriebsmaschine vorgeschaltete Schaltereinrichtung (zum Beispiel ein sogenanntes Motorschütz) wird geöffnet. Auch auf diese Weise kann eine elektrische Verbindung (insbesondere von einem Gleichspannungszwischenkreis) zu der Antriebsmaschine unterbrochen und somit eine Energieversorgung unterbunden werden.

Bevorzugt wird, dass zum Fortsetzen der Fahrt eine andere Antriebsmaschine des Fahrzeugs als die von dem Kurzschluss betroffene Antriebsmaschine als Traktionsmotor verwendet wird. Alternativ könnte das Fahrzeug abgeschleppt werden. Die von dem Kurzschluss betroffene Antriebsmaschine wird hingegen vorzugsweise nicht länger zum Erzeugen einer Fortbewegungskraft (Traktionskraft) verwendet. Wie erwähnt, kann das Fahrzeug hierfür insgesamt eine Mehrzahl von Antriebsmaschinen und/oder Antriebsvorrichtung umfassen, insbesondere eine Mehrzahl von Permanentmagnetmaschinen .

Das Fortsetzen der Fahrt mit der angepassten Geschwindigkeit kann allgemein zu einem beliebigen Zeitpunkt nach dem Detektieren des Kurzschlusses erfolgen. Es kann sich beispielsweise unmittelbar an das Detektieren anschließen. Alternativ und wie nachstehend erläutert, kann das Fahrzeug aber auch zunächst bis zum Stillstand oder bis zu einer insbesondere vorgegebenen reduzierten Geschwindigkeit abgebremst werden, bevor die Fahrt mit der angepassten Geschwindigkeit fortgesetzt wird. Anders ausgedrückt kann die Fahrt somit nach dem Detektieren des Kurzschlusses auch zumindest temporär unterbrochen werden, bevor sie in der geschilderten Weise fortgesetzt wird.

Bevorzugt ist die Geschwindigkeit des Fahrzeugs zusätzlich oder alternativ derart gewählt, dass eine mechanische Resonanzfrequenz eines Antriebsstrangs des Fahrzeugs nicht oder nur vorübergehend erreicht wird. Unter einem vorübergehenden Erreichen (und daher einem vorübergehenden Auftreten und/oder Anregen von Resonanzschwingungen) kann das Durchschreiten eines entsprechenden Frequenzbereiches verstanden werden. Insbesondere treten Schwingungen mit der Resonanzfrequenz nur kurzzeitig auf, während sich die Schwingungsfrequenz kontinuierlich erhöht oder erniedrigt. Alternativ oder zusätzlich kann die Resonanzfrequenz nur für weniger als 10 Sekunden, weniger als 5 Sekunden, weniger als 1 Sekunde oder weniger als 100 ms auftreten.

Die Geschwindigkeit des Fahrzeugs kann also derart gewählt werden, dass länger anhaltende Schwingungen des Antriebsstranges nur mit Frequenzen oberhalb oder unterhalb einer entsprechenden Resonanzfrequenz auftreten. Zeichnet sich der Antriebsstrang durch eine Mehrzahl von Resonanzfrequenzen aus, kann vorgesehen sein, dass keine dieser Resonanzfrequenzen erreicht wird oder analog zum Vorstehenden nur vorübergehend erreicht oder durchschritten wird. Kritische Bereiche des Antriebsstrangs, die durch das Verhindern von Resonanzschwingungen vor mechanischen Beschädigungen geschützt werden sollen, können insbesondere die Aufhängung der Antriebseinrichtungen bzw. einer Antriebsmaschine zum Beispiel in Form eines permanenterregten Traktionsmotors betreffen. Ferner kann die Aufhängung eines Getriebes des Antriebsstrangs betroffen sein.

Der Zusammenhang zwischen der gewählten Geschwindigkeit und den auftretenden Schwingungsfrequenzen und insbesondere Resonanzfrequenzen kann durch Berechnungen, Simulationen und/oder Testfahrten ermittelt werden. Übergeordnet kann somit eine geeignete Geschwindigkeit unterhalb der Resonanzfrequenz als fester zulässiger Wert oder Wertebereich hinterlegt werden, zum Beispiel in einer Steuereinrichtung des Fahrzeugs.

Das Wählen der Geschwindigkeit, sodass keine Resonanzfrequenzen erreicht werden, kann als weitere Bedingung zu einer oder mehrerer der vorstehend genannten Auswahlkriterien für die kritische Geschwindigkeit definiert sein. Anders ausgedrückt kann das Vermeiden von Resonanzfrequenzen als zusätzliche Randbedingung für das Festlegen der Geschwindigkeit zum Fortsetzen der Fahrt definiert sein (d.h. zum Festlegen einer Fahrgeschwindigkeit oder Rotationsgeschwindigkeit/Drehzahl der Antriebsmaschine). Die entsprechende Geschwindigkeit darf dann weder zu Resonanzfrequenzen führen noch oberhalb der kritischen Geschwindigkeit liegen.

Beispielsweise kann ein erster möglicher Geschwindigkeitswert zunächst gemäß einem der vorstehenden oder nachstehenden Aspekte bezüglich dem Ermitteln einer kritischen Geschwindigkeit sowie eines Wertes unterhalb der kritischen Geschwindigkeit festgelegt werden. Zusätzlich kann ein zweiter möglicher Geschwindigkeitswert unter Berücksichtigung der Resonanzfrequenzen ermittelt werden. Der niedrigere des ersten und zweiten Geschwindigkeitswertes kann dann zum Fortsetzen der Fahrt ausgewählt werden.

Bevorzugt ist aber vorgesehen, dass beide Kriterien eingehalten werden, d. h., die Geschwindigkeit wird derart gewählt, dass weder ein erhöhtes Kurzschlussrisiko besteht, noch ein erhöhtes Risiko für Resonanzschwingungen.

Durch die erfindungsgemäß ebenso vorgesehene Möglichkeit für ein alleiniges Berücksichtigen von Resonanzschwingungen bei der Geschwindigkeitswahl zum Fortsetzen der Fahrt kann schließlich sichergestellt werden, dass auch im Fall eines permanent anstehenden Kurzschlusses (zum Beispiel in Form einer Verschweißung), bei der das erneute Auftreten des Kurzschlusses nicht oder nur geringfügig geschwindigkeitsabhängig ist, dennoch eine geeignete Geschwindigkeit für das Fortsetzen der Fahrt gewählt werden kann, die eine ausreichende Betriebssicherheit gewährleistet. Es versteht sich aber, dass eine Geschwindigkeitswahl zur Vermeiden von Resonanzfrequenzen auch dann die Betriebssicherheit erhöht, wenn ein geschwindigkeitsabhängiger Kurzschluss vorliegt (zum Beispiel in Form eines lediglich temporär auftretenden Lichtbogens), der durch Reduzieren der Fahrgeschwindigkeit auf einen Wert unterhalb einer kritischen Geschwindigkeit verhindert werden soll.

Die Erfindung kann deshalb auch allgemein vorsehen, dass dann, wenn sich kein Geschwindigkeitswert ermitteln lässt, mit dem ein Kurzschluss vermeidbar ist (beispielsweise da ein permanent anstehender Kurzschluss aufgrund einer Verschweißung vorliegt und kein Lichtbogen-Kurzschluss der aufgrund induzierter Spannungen entsteht und somit geschwindigkeitsabhängig ist), allein die Geschwindigkeitswahl zum Vermeiden von Resonanzfrequenzen erfolgt.

Insbesondere kann das Ermitteln einer kritischen Geschwindigkeit und/oder einer Geschwindigkeit unterhalb hiervon abgebrochen werden, wenn dies zu keinen sinnvollen Ergebnissen führt und stattdessen allein das Vermeiden von Resonanzfrequenzen als Kriterium für die Geschwindigkeitswahl herangezogen werden. Dass das Ermitteln einer kritischen Geschwindigkeit und/oder einer Geschwindigkeit unterhalb hiervon nicht in sinnvoller Weise möglich ist, kann zum Beispiel dadurch festgestellt werden, dass bei einem erneuten Anfahren nach einem Nothalt unmittelbar wieder ein Kurzschluss detektiert wird. Dies deutet auf das Vorliegen eines permanent anliegenden Kurzschlusses hin, der sich nicht durch die geeignete Wahl einer Geschwindigkeit beziehungsweise kritischen Geschwindigkeit vermeiden lässt.

In einer Weiterbildung des Verfahrens und des Fahrzeugs ist die Geschwindigkeit (und/oder die kritische Geschwindigkeit) als ein vorbestimmter Wert oder Wertebereich vorgegeben. Insbesondere kann die kritische Geschwindigkeit vorab (d. h. vor dem Auftreten des Kurzschlusses) und z. B. unabhängig von den tatsächlichen Betriebsbedingungen beim Auftreten des Kurzschlusses festgelegt werden. Der Wert oder Wertebereich kann beim Betrieb oder über die Lebensdauer des Fahrzeugs hinweg feststehen bzw. konstant sein, optional aber auch neu festlegbar sein. Ein Vorteil dieser Variante ist, dass das Fahrverhalten des Fahrzeugs im Fall des Auftretens eines Kurzschlusses klar definiert ist.

Ein geeigneter Wert oder Wertebereich kann zum Beispiel mittels Testfahrten, Berechnungen oder Simulationen ermittelt werden. Der Wert bzw. der Wertebereich kann allgemein derart gewählt sein, dass eine von dem Rotor (Läufer) in dem Stator (Ständer) induzierte Spannung bei dem entsprechend vorbestimmten Geschwindigkeitswert oder - wertebereich ein vorbestimmtes Niveau nicht überschreitet. Die induzierte Spannung hängt im Allgemeinen unmittelbar und eindeutig von der Drehgeschwindigkeit des Läufers ab. Die Abhängigkeit ist typischerweise jedoch in den Fällen, in denen der Stator stromdurchflossen ist und nicht stromdurchflossen ist, unterschiedlich. Wenn daher die Stromversorgung der Antriebsmaschine für die Weiterfahrt nach Kurzschluss abgeschaltet wird, reicht es aus, die kritische Geschwindigkeit nur für diesen Fall festzulegen.

Insbesondere kann die von dem Rotor bei dem feststehenden Wert oder Wertebereich induzierte Spannung derart gering sein, dass das Ausbilden eines Kurzschlusses und insbesondere das Entzündens eines Lichtbogens innerhalb der Antriebsmaschine mit hoher Wahrscheinlichkeit ausgeschlossen werden kann. Als Beispiel sei eine bei der festgesetzten Geschwindigkeit induzierte Spannung von nicht mehr als 5 %, nicht mehr als 10 %, nicht mehr als 20 % oder nicht mehr als 30 % der maximalen Betriebsspannung (insbesondere Nennspannung) oder der zum Zeitpunkt des Auftretens des Kurzschlusses anliegenden Betriebsspannung der Antriebsmaschine genannt. Unter der Betriebsspannung ist die elektrische Spannung zu verstehen, die beim Traktionsbetrieb der Antriebsmaschine am Stator anliegt. Im Fall einer dreiphasigen Maschine kann die Betriebsspannung zum Beispiel als effektive Spannung der drei Phasen oder Amplitude einer einzelnen Phase angegeben werden.

Bei einer Weiterbildung des Verfahrens und des Fahrzeugs ist vorgesehen, dass die kritische Geschwindigkeit in Bezug auf die Fahrgeschwindigkeit des Fahrzeugs auf einen Wert von nicht mehr als 8 km/h, nicht mehr als 21 km/h nicht mehr als 24 km/h, nicht mehr als 45 km/h, oder nicht mehr als 51 km/h festgelegt wird bzw. dem entspricht, d.h. in einer entsprechenden Fahrgeschwindigkeit des Fahrzeugs resultiert. Gemäß einer Variante wird die Fahrt mit einem feststehenden Geschwindigkeitswert oder einem - wertebereich fortgesetzt, der beide der vorstehend genannten Voraussetzungen erfüllt. Hierfür kommt zum Beispiel eine Geschwindigkeit von ca. 20 km/h in Betracht. Ist die kritische Geschwindigkeit daher nicht als Fahrgeschwindigkeit sondern als eine Rotationsgeschwindigkeit oder Drehzahl der Antriebsmaschine oder eines anderen Teils des Antriebsstranges definiert, kann sie derart gewählt sein, dass sie einer der vorstehend genannten Fahrgeschwindigkeiten entspricht. Liegt in diesem Zusammenhang eine veränderliche Übersetzung zwischen der Antriebsmaschine und dem angetriebenen Rad oder Rädern des Fahrzeugs vor, kann je nach aktueller gewählter Übersetzung (und/oder je nach eingelegtem Gang) auch eine entsprechend individuelle kritische (Rotations-) Geschwindigkeit vorgegeben werden. Alternativ kann zum Fortsetzen der Fahrt das Einlegen eines vorbestimmten Ganges als Voraussetzung definiert sein.

Weiterhin kann vorgesehen sein, dass dann, wenn ein Kurzschluss detektiert wird, wenigstens einer der folgenden Schritte ausgeführt wird:
- Sperren eines die Antriebsmaschine speisenden Stromrichters;
- Öffnen einer Schaltereinrichtung der Antriebsmaschine.
Beide Schritte können allgemein bewirken, dass die Antriebsmaschine nicht mehr mit elektrischer Energie aus einem elektrischen Traktionsnetzwerk des Fahrzeugs versorgt wird und folglich elektrisch abgeschaltet wird. Insbesondere kann die Antriebsmaschine durch jeden dieser Schritte elektrisch von weiteren Komponenten des Traktionsnetzwerkes getrennt werden.

Das Öffnen der Schaltereinrichtung kann allgemein mit dem Unterbrechen einer elektrischen Verbindung zwischen der Antriebsmaschine und weiteren Komponenten des Traktionsnetzwerkes einhergehen, insbesondere einer Verbindung mit dem Stromrichter. Das Sperren des Stromrichters kann ein Sperren von dessen Halbleiterschaltelementen umfassen und allgemein in einem Deaktivieren des Stromrichters resultieren.

Gemäß einer weiteren Variante des Verfahrens und des Fahrzeugs wird die kritische Geschwindigkeit auf einen Wert (d.h. eine Fahrgeschwindigkeit oder Rotationsgeschwindigkeit) festgelegt oder begrenzt, der gleich zu oder unterhalb der Geschwindigkeit liegt, bei der das Vorhandensein des Kurzschlusses detektiert wurde. Insbesondere kann diejenige Geschwindigkeit als kritische Geschwindigkeit berücksichtigt werden, bei der erstmals das Auftreten des Kurzschlusses detektiert wurde (beispielsweise infolge des Entzündens eines Lichtbogens).

Eine weitere Variante des Verfahrens und des Fahrzeugs sieht vor, dass für die kritische Geschwindigkeit ein Wertebereich festgelegt wird, in dem eine der kritischen Geschwindigkeit entsprechende elektrische Größe (insbesondere eine elektrische Spannung des Läufers) der Antriebseinrichtung in einem vorbestimmten Wertebereich liegt, insbesondere in einem Wertebereich, bei dem der Kurzschluss aufgetreten ist.

Alternativ kann die kritische Geschwindigkeit auf einen Entsprechungswert festgelegt werden, zu dem ein der kritischen Geschwindigkeit entsprechender Wert einer elektrischen Größe der Antriebseinrichtung existiert, bei dem der Kurzschluss aufgetreten ist. Die kritische Geschwindigkeit kann auch auf einen Wert unterhalb des Entsprechungswertes festgelegt werden.

Da die Fahrt bei einer Geschwindigkeit unterhalb der kritischen Geschwindigkeit fortgesetzt wird, kann auf diese Weise erreicht werden, dass die elektrische Größe genau nicht mehr in den vorbestimmten Wertebereich gelangt (d. h. die gewählte Fahrgeschwindigkeit oder Rotationsgeschwindigkeit ist geringer als die kritische Geschwindigkeit, die aber erreicht werden müsste, damit die elektrische Größe erneut in den Wertebereich gelangt). Insbesondere kann die kritische Geschwindigkeit derart gewählt werden, dass hiermit im Wesentlichen eine Untergrenze des Wertebereichs erreichbar wäre. Bei Geschwindigkeiten unterhalb dieser kritischen Geschwindigkeit würden man dann folglich nicht mehr in den Wertebereich gelangen.

Bei der elektrischen Größe kann es sich um eine stromabhängige oder spannungsabhängige (oder auch stromänderungsabhängige oder spannungsänderungsabhängige) Größe der Antriebseinrichtung handeln. Beispielsweise kann die Größe aus einem Eingangsstrom und/oder eine an den Phasenleitungen der Antriebsmaschine der Antriebseinrichtung anliegende Spannung abgeleitet werden. Dies kann das Ableiten eines Maximalwerts oder Minimalwerts des Stroms oder der Spannung über ein vorgeschriebenes Zeitintervall einschließen, wobei dieser Wert anschließend die entsprechende Größe bildet.

Insbesondere kann es sich bei der elektrischen Größe um eine der vorstehend im Zusammenhang mit den Detektionseinrichtungen der DE 10 2014 219 278 A1 und der DE 10 2014 217 431 A1 geschilderten Größen handeln, also zum Beispiel um eine stromänderungsabhängige Größe, eine drehzahlabhängige Größe und/oder oder eine potentialdifferenzabhängige Größe.

Übergeordnet kann auch vorgesehen sein, dass eine Mehrzahl elektrischer Größen der Antriebseinrichtungen betrachtet wird, wobei die Fahrgeschwindigkeit vorzugsweise derart gewählt wird, dass keine der diesen Größen jeweils zugeordneten kritischen Geschwindigkeiten erreicht wird.

Der kritische Wertebereich kann auch lediglich einen einzigen Wert oder aber eine Mehrzahl von Werten enthalten. Der Zusammenhang zwischen der kritischen Geschwindigkeit und dem Wertebereich kann rechnerisch bestimmt werden oder anhand vorab (d.h. vor dem Auftreten des Kurzschlusses) hinterlegter und zum Beispiel per Simulationen oder Testfahrten gewonnener Informationen. Insbesondere kann die kritische Geschwindigkeit derjenigen Geschwindigkeit entsprechen, bei der der Wertebereich erstmals erreicht wird oder wurde und/oder bei der erstmals ein Kurzschluss vorlag.

Eine weitere Ausführungsform von Verfahren und Fahrzeug sieht vor, dass das Fahrzeug zumindest solange abgebremst wird, bis kein Kurzschluss mehr detektiert wird, wobei die kritische Geschwindigkeit auf diejenige Geschwindigkeit festgelegt wird, bei der das Vorliegen eines Kurzschluss-Stroms zuletzt detektiert wurde. Mit anderen Worten wird bei dieser Ausführungsform die kritische Geschwindigkeit auf eine Geschwindigkeit festgelegt, bei der nach einem Abbremsen im Anschluss an das Detektieren des Kurzschlusses das Vorliegen des Kurzschlusses zuletzt detektiert wird.

Als Beispiel sei das Detektieren eines Kurzschlusses bei 100 km/h genannt. Das Fahrzeug kann daraufhin automatisch und/oder manuell gesteuert abgebremst werden, wobei weiter überwacht wird, ob ein Kurzschluss noch detektierbar ist. Sobald kein Kurzschluss mehr detektiert wird (zum Beispiel bei 50 km/h), kann diejenige Geschwindigkeit, bei der zuletzt noch ein Kurzschluss detektiert wurde (zum Beispiel 51 km/h) als kritische Geschwindigkeit gewählt werden. Diese Geschwindigkeit soll folglich bei einer Weiterfahrt nicht mehr erreicht werden, was von einer Steuereinrichtung entsprechend überwacht werden kann. Alternativ kann eine bei dem Auftreten des Kurzschlusses vorliegende Rotationsgeschwindigkeit bzw. Drehzahl der Antriebsmaschine betrachtet werden.

Alternativ kann z. B. die Geschwindigkeit detektiert werden, bei der der Kurzschluss zuerst aufgetreten ist und die kritische Geschwindigkeit auf diese Geschwindigkeit (d.h. auf diesen Wert) festgelegt werden. Insbesondere in diesem Fall ist es bevorzugt, dass die Geschwindigkeit bei Weiterfahrt auf einen niedrigeren Wert als die kritische Geschwindigkeit begrenzt wird.

Gemäß einer Weiterbildung des Verfahrens und des Fahrzeugs wird das Fahrzeug nach dem Detektieren des Kurzschlusses zum Stillstand gebracht, bevor es die Fahrt mit der zumindest eine der Voraussetzungen erfüllenden Geschwindigkeit fortsetzt. In diesem Zusammenhang kann ferner vorgesehen sein, den Stillstand nicht über eine bestimmte Maximalzeitdauer aufrechtzuerhalten, zum Beispiel nicht über mehr als 60 Sekunden. Dies kann das einfache steuerungstechnische Überbrücken bzw. Beenden anderweitiger Sicherheitsmaßnahmen ermöglichen, die ebenfalls bei dem Detektieren eines Kurzschlusses einsetzen.

Alternativ kann bei dem Verfahren und dem Fahrzeug vorgesehen sein, dass nach dem Detektieren des Kurzschlusses das Fahrzeug abgebremst wird, sodass eine Geschwindigkeit unterhalb der kritischen Geschwindigkeit erreicht wird, die aber einen von null verschiedene Betrag aufweist. In diesem Fall muss das Fahrzeug nicht erst zum Stillstand gebracht werden, sondern kann seine Fahrt unterbrechungsfrei aber mit einer geeignet reduzierten Geschwindigkeit fortsetzen.

Bei einer weiteren Variante des Verfahrens und des Fahrzeugs ist vorgesehen, dass wenigstens ein erster und ein zweiter kritischer Geschwindigkeitswert bestimmt werden, wobei der erste und der zweite kritische Geschwindigkeitswert anhand unterschiedlicher Ansätze gemäß jeweils einem der vorstehenden Aspekte bestimmt werden, und wobei für die weitere Fahrt vorzugsweise der geringere von dem ersten und dem zweiten kritischen Geschwindigkeitswert berücksichtigt wird.

Beispielsweise kann der erste kritische Geschwindigkeitswert als diejenige Geschwindigkeit bestimmt werden, bei der das Vorhandensein des Kurzschlusses erstmals detektiert wurde. Der zweite kritische Geschwindigkeitswert kann hingegen ein feststehender Geschwindigkeitswert sein. Anschließend kann verglichen werden, welcher dieser Geschwindigkeitswerte geringer ist, um diesen dann der Weiterfahrt zugrunde zu legen.

Auf diese Weise kann besonders zuverlässig sichergestellt werden, dass kein Zustand erreicht wird, der mit einer hohen Wahrscheinlichkeit zu einem erneuten Auftreten eines Kurzschlusses führt.

Wie bereits erwähnt, kann der Kurzschluss in der Antriebsmaschine der Antriebseinrichtung vorliegen und/oder detektiert worden sein. Alternativ oder zusätzlich ist auch ein Vorliegen und/oder Detektieren in wenigstens einer Anschlussleitung möglich, welche z.B. von einer optionalen Schaltereinrichtung (z.B. einem Motorschütz) zu der Antriebsmaschine verlaufen kann.

Die Erfindung betrifft ferner ein elektrisch angetriebenes Fahrzeug, insbesondere ein Schienenfahrzeug, mit:
- wenigstens einer Antriebseinrichtung, die eine permanentmagneterregte Antriebsmaschine umfasst;
- einer Detektionseinrichtung, die dazu eingerichtet ist, einen Kurzschluss in der Antriebseinrichtung zu detektieren; und
- einer Steuereinrichtung die dazu eingerichtet ist, eine Geschwindigkeit des Fahrzeugs zu steuern und/oder zu regeln (z.B. eine Fahrgeschwindigkeit des Fahrzeugs oder eine Rotationsgeschwindigkeit/Drehzahl der Antriebsmaschine);
wobei die Steuereinrichtung dazu ausgebildet ist, in Reaktion auf das Detektieren eines Kurzschlusses durch die Detektionseinrichtung die Fahrt bei einer Geschwindigkeit fortzusetzen, die unterhalb einer für das Auftreten des Kurzschlusses kritischen Geschwindigkeit liegt.

Das Fahrzeug kann jegliche weitere Einheit und jegliches weitere Merkmal umfassen, um sämtliche der vorstehenden oder nachstehenden Verfahrensschritte, Wechselwirkungen, Betriebszustände und Funktionen bereitzustellen. Beispielhaft seien das Vorhandensein einer Geschwindigkeitsdetektionseinrichtung genannt und/oder optionaler weiterer Komponenten, die vorstehend im Zusammenhang mit der Antriebseinrichtung erläutert wurden. Insbesondere kann das Fahrzeug dazu eingerichtet sein, ein Verfahren gemäß jeglichem der vorstehenden oder nachstehenden Aspekte auszuführen.

Der Vollständigkeit halber sei angemerkt, dass die Steuereinrichtung allgemein elektrisch und/oder digital ausgebildet und betreibbar sein kann. Ferner kann sie mit den zu steuernden Einheiten und insbesondere mit der oder den Antriebseinrichtung(en) signalübertragend verbunden sein und an diese Steuersignale ausgeben. Zusätzlich kann sie mit der Detektionseinrichtung signalübertragend verbunden sein, um von dieser entsprechende Detektionssignale zu empfangen. Ferner kann die Steuereinrichtung dazu ausgebildet sein, die kritische Geschwindigkeit gemäß einer der vorstehenden Varianten festzulegen, zum Beispiel durch entsprechende Auswahlalgorithmen.

Im Folgenden wird eine Ausführungsform der Erfindung anhand der beigefügten schematischen Figuren erläutert. In Ihrer Art und/oder Funktion übereinstimmende Merkmale können dabei mit den gleichen Bezugszeichen versehen sein. Es stellen dar:

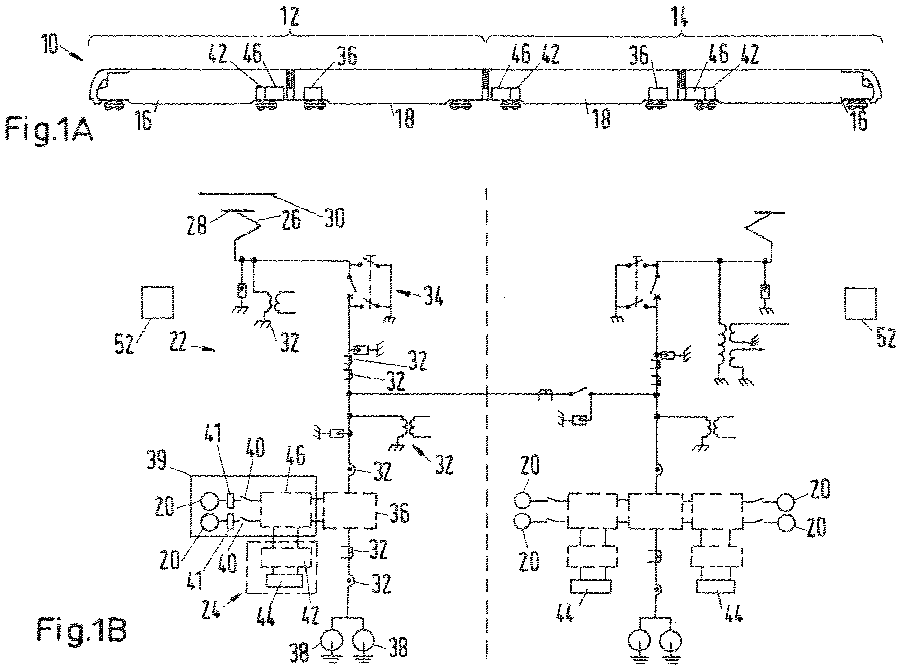

- Fig. 1A: eine Darstellung eines erfindungsgemäßen Fahrzeugs in Form eines Verbundes aus mehreren Zugteilen, wobei das Fahrzeug ein erfindungsgemäßes Verfahren ausführt; und
- Fig. 1B: eine schematische Darstellung von elektrischen Netzwerken des Fahrzeugs aus Figur 1A.

In Figur 1A ist ein Fahrzeug 10 gemäß einer Ausführungsform der Erfindung gezeigt, wobei das Fahrzeug 10 ein Verfahren gemäß einer erfindungsgemäßen Variante ausführt.

Das Fahrzeug 10 umfasst einen Verbund aus einzelnen Zugteile 12, 14, die für eine gemeinsame Fortbewegung mechanisch miteinander gekoppelt sind. Jeder Zugteil 12, 14 umfasst dabei einen Triebwagen 16 sowie einen Mittelwagen 18. Die nachfolgend erläuterten Komponenten der elektrischen Netzwerke der Zugteile 12, 14 sind dabei jeweils über den Triebwagen 16 und den Mittelwagen 18 verteilt, können aber auch lediglich in einem von Triebwagen 16 und Mittelwagen 18 zusammengefasst sein.

Im Detail sind in der linken Hälfte von Figur 1B die Netzwerke des ersten Zugteils 12 und in der rechten Hälfte diejenigen des zweiten Zugteils 14 gezeigt. Die dargestellten Netzwerke der einzelnen Zugteile 12, 14 sind in ihrer Funktionsweise prinzipiell identisch. Aus Gründen der Übersichtlichkeit werden daher lediglich die in Figur 1B linken Netzwerke näher erläutert und sind mit entsprechenden Bezugszeichen versehen.

Lediglich beispielhaft liegt ein Unterschied zwischen den elektrischen Netzwerken der Zugteile 12, 14 dahingehend vor, als dass der in Figur 1B rechte Zugteil 14 über die doppelte Anzahl von Antriebsmaschinen 20 samt dazugehörigen Stromversorgungskomponenten verfügt. Dies wirkt sich jedoch nicht auf die nachfolgend erläuterte prinzipielle Funktionsweise der entsprechenden Netzwerke aus.

In der linken Hälfte von Figur 1B erkennt man zunächst, dass die elektrischen Netzwerke des Zugteils 12 ein elektrisches Antriebsnetzwerk 22 (oder auch Traktionsnetzwerk) und ein Teilnetzwerk 24 umfassen, das auch als Hilfsbetriebenetzwerk oder Bordnetzwerk bezeichnet werden kann. Das Teilnetzwerk 24 ist strichliert umrissen dargestellt, wobei außerhalb der Strichlinie liegende Komponenten dem Antriebsnetzwerk 22 zuzuordnen sind.

Das Antriebsnetzwerk 22 umfasst einen Pantografen 26 mit einem Stromabnehmer 28, der mit einer Netzspannungsquelle in Form einer strichförmig dargestellten Oberleitung 30 elektrisch leitend verbunden werden kann. Liegt eine entsprechende Verbindung vor, kann elektrische Energie in das Antriebsnetzwerk 22 eingespeist werden. Das Antriebsnetzwerk 22 umfasst eine dem Pantografen 26 nachgeschaltete Messeinrichtung 32 in Form eines Spannungsmesstransformators. Mittels dieser Messeinrichtung 32 kann bestimmt werden, ob über den Pantografen 26 (bzw. dessen Stromabnehmer 28) elektrische Energie in das Antriebsnetzwerk 22 eingespeist wird, oder ob diesbezüglich eine Störung vorliegt.

Weiterhin erkennt man in Figur 1B einen Hauptschalter 34, der das Einspeisen der über den Stromabnehmer 28 übertragenen und von der Messeinrichtung 32 detektierten elektrischen Energie in die nachgeschalteten Komponenten des Antriebsnetzwerks 22 ermöglicht. Alternativ kann der Hauptschalter 34 diese Energieübertragung unterbinden (d. h. geöffnet werden).

Ob ein Einspeisen elektrischer Energie über den Hauptschalter 34 erfolgt, kann beispielsweise über die dem Hauptschalter 34 nachgelagerten weiteren Messeinrichtungen 32 ermittelt werden. Diese können beispielsweise den Strom messen, der über den Hauptschalter 34 in die nachgeschalteten Bestandteile des Antriebsnetzwerks 22 fließt (siehe die oberen beiden und als einzelne Spulen dargestellten Strommesseinheiten bzw. Stromesstransformatoren). Zusätzlich oder alternativ kann erneut eine Messeinrichtung 32 in Form eines Spannungsmesstransformators vorgesehen sein.

Dem Hauptschalter 34 nachgeschaltet ist ein an sich optionaler Transformator 36, der auch als Traktionstransformator bezeichnet werden kann. Dieser wandelt die an der Oberleitung 30 anliegende und typischerweise vorgegebene bzw. normierte Spannung von zum Beispiel 16 kV in eine gewünschte Spannung um.

Der Transformator 36 ist zum einen mit den Rädern 38 des Zugteils 12 elektrisch verbunden, wobei nur ausgewählte Räder 38 in der Darstellung von Figur 1B gezeigt sind. Zum anderen ist der Transformator 36 ausgangsseitig mit einer Antriebseinrichtung 39 verbunden. Die Antriebseinrichtung 39 umfasst einen Stromrichter bzw. Traktionsrichter 46, einen jeweils nicht gesondert dargestellten Gleichspannungs-Zwischenkreis und einen Gleichrichter. Man erkennt ferner, dass die Antriebseinrichtung 39 mit dem Teilnetzwerk 24 verbunden ist.

Ferner umfasst die Antriebseinrichtung 39 auch eine Mehrzahl von Antriebsmaschinen 20. Diese sind jeweils als Permanentmagnetmaschinen ausgebildet und treiben die Räder des linken Zugteils 12 aus Figur 1B an. Der vollständige Antriebsstrang (d. h. die Achse(n), ein etwaiges Getriebe und andere mechanische Verbindungskomponenten) zwischen den Antriebsmaschinen 20 und den Rädern 38 ist nicht gesondert dargestellt, jedoch gemäß herkömmlichen Konfigurationen ausgebildet. Zwischen den Antriebsmaschinen 20 und dem Stromrichter 46 ist jeweils eine Schaltereinrichtung 40 geschaltet (oder auch ein Motorschütz), welche die elektrische Verbindung zwischen diesen Komponenten selektiv öffnen und schließen kann. Zwischen der Schaltereinrichtung 40 und den Antriebsmaschinen 20 kann jeweils auch ein nicht dargestellter Anschlusskasten positioniert sein, mit dem die Antriebsmaschinen 20 zum Beispiel über eine Steckverbindung (z.B. mittels Harting-Stecker) verbunden werden können.

Den Antriebsmaschinen 20 unmittelbar vorgeschaltet ist ferner jeweils eine Detektionseinrichtung 41. Diese kann gemäß einer der vorstehend erläuterten Varianten aus dem Stand der Technik ausgebildet sein und über das Ermitteln einer oder mehrerer strom- und/oder spannungsabhängiger Größen einen Kurzschluss innerhalb der jeweiligen Antriebsmaschine 20 detektieren. In dem gezeigten Fall sind die Detektionseinrichtungen 41 somit lediglich dazu ausgebildet, einen Kurzschluss innerhalb der Antriebsmaschine 20 zu detektieren, nicht aber in anderweitigen Komponenten der Antriebseinrichtung 39. Letzteres kann erfindungsgemäß zusätzlich oder alternativ aber ebenso vorgesehen sein, insbesondere in der Weise, das in zu der Antriebsmaschine 20 führenden Anschlussleitungen, die in der Darstellung von Fig. 1B die Detektionseinrichtungen 41 umfassen, ebenfalls Kurzschlüsse detektierbar sind, nicht aber in dem Stromrichter 46 oder den Schaltereinrichtungen 40.

Das Teilnetzwerk 24 umfasst einen an sich optionalen Stromrichter 42. Dieser ist in dem gezeigten Beispiel dazu ausgelegt, die Gleichspannung des nicht dargestellten Zwischenkreises der Antriebseinrichtung 46 in eine ein- oder mehrphasige Wechselspannung umzuwandeln. Der Stromrichter 42 des Teilnetzwerkes 24 ist ausgangsseitig mit einem lediglich schematisch angedeuteten Verbraucher 44 verbunden. Der Verbraucher 44 kann eine Hilfsbetriebsfunktion des Zugteils 12 bereitstellen, zum Beispiel die Innenbeleuchtung des Zugteils 12 oder eine Klimatisierung hiervon. Es versteht sich, dass auch mehrere Verbraucher 44 vorgesehen sein können.

Schließlich ist eine Steuereinrichtung 52 gezeigt, die über nicht dargestellte Signalpfade mit sämtlichen der geschilderten Komponenten verbunden ist und von diesen Signale empfangen und/oder an diese aussenden kann. Hierbei kann es sich zum Beispiel um von den Messeinrichtungen 32 und/oder Detektionseinrichtungen 41 empfangene Signale handeln. Die ausgesendeten Signale können hingegen dazu dienen, die geschilderten Komponenten des Antriebsnetzwerks 22 und auch des Teilnetzwerkes 24 zu aktivieren oder zu deaktivieren oder in die geschilderten Betriebsmodi zu schalten.

Lediglich der Vollständigkeit halber sei erneut auf Figur 1A verwiesen, in der die Verteilung der vorstehend geschilderten Hauptkomponenten des Antriebsnetzwerks 22 in Form des Transformators 36, des Stromrichters 46 und des Stromrichters 42 des Teilnetzwerkes 24 innerhalb der Zugteile 12, 14 gezeigt ist.

Im Fahrbetrieb des Fahrzeugs 10 wird über den Stromabnehmer 28 (und den geschlossenen Hauptschalter 34) elektrische Energie aus der Netzspannungsquelle 30 in das Antriebsnetzwerk 22 eingespeist. Der Transformator 36 wandelt die anliegende Spannung dabei in eine gewünschte Spannung um, welche dann von dem nicht dargestellten Gleichrichter der Antriebseinrichtung 39 in eine Gleichspannung umgewandelt wird. Um eine Fortbewegungskraft bereitzustellen, werden die Schaltereinrichtungen 40 geschlossen und der Stromrichter 46 wandelt die Spannung des nicht dargestellten Zwischenkreises, der zwischen den Gleichrichter und den Stromrichter 46 geschaltet ist, in eine für den Motorbetrieb der Antriebsmaschinen 20 geeignete Spannung um. Ebenso erfolgt eine Speisung des Teilnetzwerkes 24 über den Zwischenkreis, um die geschilderten Hilfsbetriebefunktionen bereitzustellen. Dieses Vorgehen ist an sich bekannt.

Während die Antriebsmaschinen 20 im Motorbetrieb arbeiten, überwacht die jeweilige Detektionseinrichtung 41 die relevanten elektrischen Größen dieser Arbeitsmaschinen 20. Wird in der vorstehend erläuterten Weise ein Kurzschluss detektiert, wird dies an die Steuereinrichtung 52 signalisiert. Diese unterbricht daraufhin die Erregung der betroffenen Antriebsmaschine 20 durch den damit verbundenen Stromrichter 46 (beispielsweise durch entsprechendes Ansteuern bzw. Deaktivieren des Stromrichters 46). Zusätzlich oder alternativ kann sie die Schaltereinrichtung 40 der betroffenen Antriebsmaschine 20 öffnen.

Parallel zu oder im Anschluss an diese Schritte kann die Steuereinrichtung 52 den Betrieb des Fahrzeugs 10 gemäß einer der nachfolgenden Varianten steuern:
- Das Fahrzeug 10 wird zum Stillstand gebracht, der vorzugsweise weniger als 60 Sekunden andauert. Anschließend wird das Fahrzeug erneut beschleunigt und bei einer Geschwindigkeit unterhalb einer kritischen Geschwindigkeit weiter betrieben. Das nicht Überschreiten der kritischen Geschwindigkeit wird von der Steuereinrichtung 52 fortlaufend überwacht, in dem auf herkömmliche und nicht gesondert dargestellte Geschwindigkeitsmesseinrichtungen zurückgegriffen wird.
- Das Fahrzeug 10 wird aus dem laufenden Fahrbetrieb auf eine reduzierte Geschwindigkeit abgebremst, die größer als null ist und die unterhalb einer kritischen Geschwindigkeit liegt.
- Das Fahrzeug 10 wird solange abgebremst, bis die Detektionseinrichtung keinen Kurzschluss mehr detektiert. Die Geschwindigkeit, bei der zuletzt ein Kurzschluss detektiert wurde, kann als kritische Geschwindigkeit gewählt werden. Die Fahrt wird anschließend bei einer Geschwindigkeit unterhalb der kritischen Geschwindigkeit fortgesetzt.

Bei den ersten beiden aufgelisteten Varianten kann die kritische Geschwindigkeit gemäß jeglicher der vorstehend allgemein erläuterten Aspekte festgelegt werden. Beispielsweise kann es sich um einen feststehenden Fahrgeschwindigkeitswert bzw. -wertebereich von nicht mehr als 31 km/h handeln. Alternativ kann die kritische Geschwindigkeit in Bezug auf eine Rotationsgeschwindigkeit/Drehzahl der Antriebsmaschinen 20 oder ferner alternativ auf einen anderen Teil des Antriebsstranges festgelegt werden.

Als weitere Randbedingung kann zusätzlich vorgesehen sein, dass die Geschwindigkeit des Fahrzeugs 10 derart gewählt wird, dass keine mechanischen Resonanzfrequenzen des Antriebsstrangs auftreten oder diese nur kurzzeitig vorliegen.

Beispielsweise können entsprechende Resonanzfrequenzen bei einem Beschleunigen aus dem Stillstand auf eine Geschwindigkeit unterhalb der kritischen Geschwindigkeit kurzzeitig durchschritten werden, aber nicht über einen längeren Zeitraum und vorzugsweise nicht über mehrere Sekunden oder Minuten aufrechterhalten werden. Wird also eine Geschwindigkeit zum Fortsetzen der Fahrt in Betracht gezogen, die mit einer möglichen Resonanzfrequenz einhergeht, kann diese Geschwindigkeit um einen gewissen Anteil erhöht oder erniedrigt werden, um das Auftreten von Resonanzfrequenzen zu vermeiden.

Es versteht sich, dass das Fortsetzen der Fahrt mit jeglicher der in Figur 1B gezeigten weiteren Antriebsmaschinen 20 der Zugteile 12,14 bewerkstelligt werden kann, unabhängig davon, in welchem der Zugteile 12,14 ein Kurzschluss detektiert wird. Die Antriebsmaschine 20, in der der Kurzschluss detektiert wurde, trägt hingegen nicht mehr zum Aufbringen der Fortbewegungskraft bei.

Im Ergebnis kann somit erreicht werden, dass das Fahrzeug 10 trotz Auftreten des Kurzschlusses seine Fahrt fortsetzen kann, wenn auch nur mit einer reduzierten Geschwindigkeit unterhalb der erläuterten kritischen Geschwindigkeit. Die reduzierte Geschwindigkeit stellt sicher, dass der Rotor der kurzgeschlossen Antriebsmaschine 20, der stets drehmomentübertragend mit wenigstens einem der Fahrzeugräder 38 gekoppelt ist und daher bei jeder Bewegung des Fahrzeugs 10 mitrotiert wird, keine Spannungen innerhalb der Antriebsmaschine 20 induziert, die zu einem erneuten Auslösen des Kurzschlusses führen (beispielsweise dem erneuten Entzünden eines Lichtbogens).

Im Gegensatz zu bisherigen Lösung muss das Fahrzeug 10 daher nicht über eine längere Zeitdauer auf oftmals freier Strecke anhalten, bis der Schaden repariert ist oder anderweitige Maßnahmen eingeleitet werden. Stattdessen kann die Fahrt mit einer derartigen Geschwindigkeit fortgesetzt werden, bei der das Auftreten eines erneuten Kurzschlusses mit einer ausreichenden Wahrscheinlichkeit ausgeschlossen werden kann. Das Fahrzeug 10 kann somit selbstständig zum nächsten Bahnhof oder zu einer Wartungsstation gelangen.

Alternativ kann auch vorgesehen sein, nach dem Detektieren eines Kurzschlusses die Fahrgeschwindigkeit allein zum Vermeiden von Resonanzfrequenzen anzupassen. Dies ist insbesondere dann relevant, wenn als ein relevanter Fehlerfall von Kurzschlüssen ausgegangen wird, welche permanent anliegen oder in Form von Verschweißungen auftreten. Derartige Kurzschlüsse können nur bedingt oder auch gar nicht durch das Begrenzen der Fahrgeschwindigkeit vermieden werden. Zum Gewährleisten einer Mindestbetriebssicherheit kann die Geschwindigkeit aber dennoch angepasst werden, um zumindest Resonanzfrequenzen in dem Antriebsstrang zu vermeiden.

Bevorzugt ist aber vorgesehen, dass beide Kriterien betrachtet werden, d. h. die Geschwindigkeit sowohl in Anbetracht eines Kurzschlussrisikos (zumindest mit Bezug auf geschwindigkeitsabhängige Kurzschlüsse, wie einem entzündbaren Lichtbogen) als auch zum Vermeiden von Resonanzfrequenzen angepasst wird. Sollte sich dabei herausstellen, dass sich der Kurzschluss nicht durch ein Anpassen der Geschwindigkeit verhindern lässt (zum Beispiel weil nach einem Anfahren aus dem Stillstand unmittelbar wieder ein Kurzschluss detektiert wird) kann darauf geschlossen werden, dass tatsächlich ein permanent anliegender Kurzschluss vorhanden ist und die Geschwindigkeit deshalb nur nach Maßgabe von zu vermeidenden Resonanzfrequenzen anzupassen ist.

## Patentansprüche

1. Verfahren zum Betreiben eines elektrisch angetriebenen Fahrzeugs (10) im Kurzschlussfall, insbesondere eines Schienenfahrzeugs,
umfassend die Schritte:
Detektieren eines Kurzschlusses in einer Antriebseinrichtung (39) des Fahrzeugs (10), die eine permanentmagneterregte Antriebsmaschine (20) umfasst, während einer Fahrt des Fahrzeugs (10);
Fortsetzen der Fahrt bei einer Geschwindigkeit, die wenigstens eine der folgenden Voraussetzungen erfüllt:
- die Geschwindigkeit liegt unterhalb einer für das Auftreten des Kurzschlusses kritischen Geschwindigkeit;
- die Geschwindigkeit ist derart gewählt, dass Resonanzschwingungen eines Antriebsstrangs des Fahrzeugs (10) nicht oder nur vorübergehend auftreten.

2. Verfahren nach Anspruch 1,
wobei die Geschwindigkeit als ein vorbestimmter Wert oder Wertebereich vorgegeben ist.

3. Verfahren nach Anspruch 1 oder 2,
wobei dann, wenn ein Kurzschluss detektiert wird, wenigstens einer der folgenden Schritte ausgeführt wird:
- Sperren eines die Antriebsmaschine (20) speisenden Stromrichters (46);
- Öffnen einer Schaltereinrichtung (40) der Antriebsmaschine (20).

4. Verfahren nach Anspruch 1,
wobei die kritische Geschwindigkeit auf einen Wert festgelegt oder begrenzt wird, der gleich zu oder unterhalb der Geschwindigkeit liegt, bei der Kurzschluss aufgetreten ist.

5. Verfahren nach Anspruch 1,
wobei
- für die kritische Geschwindigkeit ein Wertebereich festgelegt wird, in dem eine der kritischen Geschwindigkeit entsprechende elektrische Größe der Antriebseinrichtung (39) in einem vorbestimmten Wertebereich liegt, insbesondere in einem Wertebereich, bei dem der Kurzschluss aufgetreten ist, oder
- die kritische Geschwindigkeit auf einen Entsprechungswert festgelegt wird, zu dem ein der kritischen Geschwindigkeit entsprechender Wert einer elektrischen Größe der Antriebseinrichtung (39) existiert, bei dem der Kurzschluss aufgetreten ist, oder die kritische Geschwindigkeit auf einen Wert unterhalb des Entsprechungswertes festgelegt wird.

6. Verfahren nach Anspruch 1,
wobei das Fahrzeug zumindest solange abgebremst wird, bis kein Kurzschluss-Strom mehr detektiert wird, und wobei die kritische Geschwindigkeit auf diejenige Geschwindigkeit festgelegt wird, bei der das Vorliegen des Kurzschlusses zuletzt detektiert wurde.

7. Verfahren nach einem der vorangehenden Ansprüche,
wobei das Fahrzeug (10) nach dem Detektieren des Kurzschlusses zum Stillstand gebracht wird, bevor es die Fahrt mit der zumindest eine der Voraussetzungen erfüllenden Geschwindigkeit fortsetzt.

8. Verfahren nach einem der vorangehenden Ansprüche,
wobei das Fahrzeug (10) nach dem Detektieren des Kurzschlusses abgebremst wird, sodass eine Geschwindigkeit unterhalb der kritischen Geschwindigkeit erreicht wird, die aber einen von null verschiedene Betrag aufweist.

9. Verfahren nach einem der vorangegangenen Ansprüche,
wobei der Kurschluss in der Antriebsmaschine (20) der Antriebseinrichtung (39) vorliegt und/oder detektiert worden ist.

10. Elektrisch angetriebenes Fahrzeug (10), insbesondere Schienenfahrzeug, mit:
wenigstens einer Antriebseinrichtung (39), die eine permanentmagneterregte Antriebsmaschine (20) umfasst;
einer Detektionseinrichtung (41), die dazu eingerichtet ist, einen Kurzschluss in der Antriebseinrichtung (39) zu detektieren; und
einer Steuereinrichtung (52), die dazu eingerichtet ist, eine Geschwindigkeit des Fahrzeugs (10) zu steuern;
wobei die Steuereinrichtung (52) dazu ausgebildet ist, in Reaktion auf das Detektieren eines Kurzschlusses durch die Detektionseinrichtung (41) die Fahrt bei einer Geschwindigkeit fortzusetzen, die wenigstens eine der folgenden Voraussetzungen erfüllt:
- die Geschwindigkeit liegt unterhalb einer für das Auftreten des Kurzschlusses kritischen Geschwindigkeit;
- die Geschwindigkeit ist derart gewählt, dass Resonanzschwingungen eines Antriebsstrangs des Fahrzeugs (10) nicht oder nur vorübergehend auftreten..
